# EUROPÄISCHE PATENTANMELDUNG

(11) **EP 2 168 437 A1**
(43) Veröffentlichungstag der Anmeldung: **31.03.2010**
(21) Anmeldenummer: 09075453.2
(22) Anmeldetag: 30.09.2009
(51) Int. Cl.: A22C 13/00

(54) **Wenigstens ein Transfermittel als Nahrungsmittelzusatzstoff enthaltende Verpackungs-Flachhülle in Form eines Trägerlaminats sowie Verfahren zum Herstellen einer solchen Flachhülle**

(30) Priorität: 30.09.2008 DE 102008049571
(71) Anmelder: Drews, Dirk, 21465 Wentorf (DE)
(72) Erfinder: Drews, Dirk, 21465 Wentorf (DE); Schulz, Bernhard, 21465 Wentorf (DE)
(74) Vertreter: Wenzel & Kalkoff

(57) **Zusammenfassung**

Eine Verpackungs-Flachhülle in Form eines flexiblen Trägerlaminats (1) zur Anlage an ein Nahrungsmittel enthält ein Transfermittel als Nahrungsmittelzusatzstoff und umfasst eine nicht-essbare, nicht-wasserlösliche Außenschicht (2), die eine packfeste Trägerschicht bildet, sowie eine das Transfermittel enthaltende, zur Anlage an das Nahrungsmittel bestimmte Innenschicht. Die Innenschicht besteht aus einer essbaren Innenfolie (3) auf Polysaccharid-Basis, die sich bei Druckanlage an dem Nahrungsmittel unter Bedingungen der Nahrungsmittelherstellung zum Überführen des Transfermittels an das Nahrungsmittel auflöst. Die Innenfolie (3) ist aus einheitlicher Masse hergestellt, deren Bestandteil das Transfermittel ist und die der Innenfolie (3) an ihren Flächenseiten temporär selbstklebende Oberflächeneigenschaft verleiht. Die selbstklebende Oberfläche an einer Flachseite der Innenfolie (3) bildet ein in die Flachhülle integriertes Klebemittel, das allein zwischen Außenschicht (2) und Innenfolie (3) eine das dadurch das Trägerlaminat (1) herstellende flächige stoffschlüssige Laminatverbindung bildet. Ein Verfahren umfasst die Schritte zum Herstellen einer solchen Verpackungs-Flachhülle.

## Beschreibung

Die Erfindung betrifft eine wenigstens ein Transfermittel als Nahrungsmittelzusatzstoff enthaltende Verpackungs-Flachhülle in Form eines flexiblen Trägerlaminats zur Anlage an ein mit dem Transfermittel zu versehendes Nahungsmittel, umfassend eine eine packfeste Trägerschicht bildende nicht-essbare, nicht-wasserlösliche Außenschicht und eine das Transfermittel enthaltende, zur Anlage an das Nahrungsmittel bestimmte Innenschicht.

Es handelt sich um eine Flachhülle, die in Form eines flächigen flachen Flächengebildes hergestellt wird. Insbesondere wird die flexible flache Nahrungsmittelhülle zu einem Verpackungsschlauch für Fleisch-, Wurst-, Fisch- oder Käseprodukte geformt. In dem verpackten Produkt wird der Nahrungsmittelzusatzstoff an das Nahrungsmittel, also insbesondere an das Fleisch-, Wurst-, Fisch- oder Käseprodukt abgegeben. Zum Verzehr des Nahrungsmittels wird die Hülle von dem Nahrungsmittel abgelöst, insbesondere abgeschält.

Die Außenschicht ist eine Funktionsschicht, die dazu dient, die Innenschicht zu tragen und Durchlässigkeits- und/oder Barriereeigenschaften der Nahrungsmittelhülle einzurichten. So kommt es je nach dem zu verpackenden Nahrungsmittel insbesondere darauf an, Durchlässigkeit bzw. eine Sperre für Sauerstoff, Wasserdampf und/oder Fett einzustellen. Unter Außenschicht ist eine solche zu verstehen, die einschichtig oder mehrschichtig sein kann. Zum Beispiel kann es gewünscht sein, dass eine hohe Barriere für Sauerstoff und Wasserdampf eingerichtet wird und/oder dass die Lebensmittelhülle, zum Beispiel eine Wursthülle, bei bestimmter Gas- und Dampfdurchlässigkeit Wasser-und Fettdurchgang in besonderem Maße sperrt. Die Außenschicht kann mannigfaltig ausgeführt sein. Zum Beispiel verwendet man ein wasserbeständiges Gewebe, Filme, Folien und/oder eine Kombination aus solchen nicht-wasserlöslichen, nicht-essbaren Schichten. Insbesondere werden natürliche und künstliche Fasermaterialien verwendet.

Als Kunststofffolien kommen insbesondere Polyethylen- und/oder Polyamidfolien zum Einsatz. Unter nicht-wasserlöslich ist zu verstehen, dass die Außenschicht praktisch unlöslich ist in kaltem, heißem und kochendem Wasser oder Wasserdampf.

Nahrungsmittelhüllen der betroffenen Art sind dem Prinzip nach in vielfältigster Ausführung bekannt. Auf dem Markt gibt es eine Vielzahl von durch die Hüllen gebildeten Därmen zum Übertragen von Farb-, Aroma- und/oder Geschmacksstoffen. Ein Großteil im Handel befindlicher Transferdärme wird innenliegend mit einer saugfähigen Matrix versehen, auf die Farb-, Aroma- und/oder Geschmacksstoffe, insbesonder nach Aufrauen der Innenseite, aufgetragen werden.

Aus DE 198 46 305 A1 ist eine Barriere-Außenschicht bekannt, die eine mit dieser verbundene nicht-lösliche Innenlage aus saugfähigem Material trägt, das mit Farb- und/ oder Aromastoff getränkt ist. Um die Innenlage ausreichend mit der Außenlage (Außenschicht) zu verbinden, wird Klebstoff aufgetragen. Die Innenlage muss zur Aufnahme des Farb-/Aromastoffes ausreichend saugfähig sein. Sie wird aus einem Vlies, einem Fasergemisch und/oder dergleichen gebildet. Die Innenlage der bekannten Nahrungsmittelhülle wird auf die Barriere-Außenschicht abgestimmt, damit letztere in der Laminatverbindung mit der Innenlage die gewünschte Barrierefunktion erhält. Zunächst wird das Laminat hergestellt und dann das Transfermittel aufgetragen, zum Beispiel mit einem Sprühauftrag oder im Flüssigkeitsbad. Farbe und Aroma werden in hoher Dosierung aufgebracht, um beim Raffen und Füllen der Nahrungsmittelhülle eine möglichst gleichmäßige Übertragung des Transfermittels zu erreichen.

Gemäß WO 2005/074691 A1 ist eine Nahrungsmittelhülle vorgeschlagen worden, die ein textiles Trägermaterial (Außenschicht) und eine Beschichtung aus einem essbaren, im wesentlichen wasserunlöslichen Bindemittel aufweist, das flüssige Aroma-, Farb-und/oder Geschmacksstoffe enthält und als solches auf ein in der Hülle befindliches Nahrungsmittel übertragbar ist. Die übertragbare Schicht ist nicht oder nur wenig wasserlöslich. Zwischen der übertragbaren Schicht und dem textilen Trägermaterial kann zusätzlich eine Schicht aus wasserlöslichem Material vorgesehen sein. Diese bekannten Hüllen werden dadurch hergestellt, dass ein flaches Trägermaterial (Außenschicht) mit einer feuchten/pastösen Mischung beschichtet und dann getrocknet wird.

Allgemein bestehen bei den Nahrungsmittelhüllen der bekannten Art die Erfordernisse, die Schichten besonders aufeinander abzustimmen, spezielle Beschichtungen anzubringen und Transfermittel in Anpassung an die Gesamtstruktur der Nahrungsmittelhülle anzutragen oder in die Schichten einzubringen. Eine Übersicht zum Stand der Technik auch heute noch im Markt befindlicher Produkte gibt insbesondere das Dokument DE 102 17 132 A1.

Bekannte Verfahren zum Herstellen der Nahrungsmittelhüllen sind relativ aufwendig. Auftrag oder Eintrag des Transfermittels sind von besonderen Schichtstrukturen abhängig und häufig nicht ausreichend gleichmäßig. Schlauchförmige Hüllen, die zum Einfiillen des Nahrungsmittels gerafft werden, weisen häufig in Rafffalten Bereiche mit weniger Transfermittel bzw. mit unerwünschter Konzentration in anderen Bereichen auf. Bei etlichen Verfahren wird das Transfermittel an einer schlauchförmigen Hülle aufgebracht, die dazu umgestülpt werden muss. Bei vielen Verfahren wird an der Hülleninnenseite ein Oberflächenauftrag des Transfermittels vorgesehen. Dies ist mit besonderen Herstellungsmaßnahmen verbunden.

Nach alledem liegen der Erfindung die Ziele zugrunde, eine Nahrungsmittelhülle anzugeben, die insbesondere hinsichtlich Transfereigenschaft, kostengünstiger einfacher Herstellbarkeit und Anwendungsmöglichkeiten verbessert ist. Insbesondere soll die erfindungsgemäße Nahrungsmittelhülle gleichermaßen einfach und kostengünstig mit Funktions-/Barriere-Außenschichten unterschiedlichster Eigenschaften herstellbar sein. Das Transfermittel soll auch bei Verwendung relativ geringer Mengen gleichmäßig verteilt und zur Übertragung ausreichend wirksam sein. Die flexible Nahrungsmittelhülle (Packungs-Flachhülle) soll auch bei besonderer Beanspruchung während der Verarbeitung, insbesondere bei Schlauchbildung und/oder beim Raffen ihre Transferqualität behalten. Das heißt, dass insbesondere bei mechanischer Beanspruchung Konzentrationen des Transfermittels vermieden sein sollen. Auch soll die Nahrungsmittelhülle bei ihrer Verwendung, das heißt beim Anlegen an das Nahrungsmittel, insbesondere beim Kochen, Garen, Brühen und/oder Reifen des mit der Nahrungsmittelhülle verpackten Nahrungsmittelprodukts die Funktions- bzw. Barriereeigenschaften der Außenschicht beibehalten. Die Durchgangs- bzw. Sperrverhältnisse für insbesondere Wasserdampf und Sauerstoff sollen zumindest im Wesentlichen durch die Charakteristika der Träger-Außenschicht bestimmt sein.

Die erfindungsgemäßen Ziele werden in Verbindung mit den Merkmalen der Verpackungs-Flachhülle (Nahrungsmittelhülle) der eingangs genannten Art dadurch erreicht, dass die Innenschicht aus einer essbaren Innenfolie auf Polysaccharid-Basis besteht, die sich bei Druckanlage an dem Nahrungsmittel unter Bedingungen der Nahrungsmittelherstellung zum Überführen des Transfermittels an das Nahrungsmittel auflöst, wobei die Innenfolie aus einheitlicher Masse hergestellt ist, deren Bestandteil das Transfermittel ist und die der Innenfolie an ihren Flächenseiten temporär selbstklebende Oberflächeneigenschaft derart verleiht, dass die selbstklebende Oberfläche an einer Flachseite der Innenfolie ein in die Flachhülle integriertes Klebemittel bildet, das als solches allein zwischen Außenschicht und Innenfolie eine das dadurch das Trägerlaminat herstellende flächige stoffschlüssige Laminatverbindung bildet.

Erfindungsgemäß besteht ein Verfahren zum Herstellen einer wenigstens ein Transfermittel enthaltenden Verpackungs-Flachhülle in Form eines Trägerlaminats, das durch Aneinanderlaminieren einer Außenschicht und einer mit dem Transfermittel versehenen und zur Anlage an ein Nahrungsmittel bestimmten Innenschicht hergestellt wird, darin, dass eine die Innenschicht bildende, auf Polysaccharid-Basis hergestellte essbare Innenfolie bereitgestellt wird, die aus einheitlicher Masse gebildet ist, die sich bei Druckanlage an dem Nahrungsmittel unter Bedingungen der Nahrungsmittelherstellung zum Überführen des Transfermittels an das Nahrungsmittel auflöst, deren Bestandteil das Transfermittel ist und die der Innenfolie an ihren Flächenseiten durch feuchtes Milieu temporär selbstklebende Oberflächeneigenschaft verleiht, wobei das Trägerlaminat dadurch hergestellt wird, dass mittels der in feuchtem Milieu klebrigen Oberfläche die Außenschicht und die Innenfolie aneinander laminiert werden. Besonderes eignet sich die erfindungsgemäße Nahrungsmittelhülle zur Verwendung als künstliche Wursthülle.

Mit den erfindungsgemäßen Maßnahmen werden die genannten Ziele erreicht.

Insbesondere weist die erfindungsgemäße Nahrungsmittelhülle im Ganzen einen einfachen und gezielt erhältlichen Schicht-/Strukturaufbau auf. Die Innenschicht wird durch einen vorgefertigten Bestandteil, nämlich durch die erfindungsgemäße Innenfolie gebildet. Besondere Klebeschichten oder -maßnahmen oder auch andere Maßnahmen, wie zum Beispiel Schmelzen entfallen. Aufgrund der klebefähigen Eigenschaft der Innenfolie entfällt die Anbringung von besonderen Haft-/Klebeschichten im Laminat.

Zusätzliche Beschichtungen, die herkömmlich an die Außenschicht (Trägermaterial) und/oder an Zwischenschichten anzupassen sind, werden vermieden. Die Innenfolie kann Bestandteil einer Vielzahl erfindungsgemäßer Nahrungsmittelhüllen sein. Das heißt, dass die Innenfolie universell an unterschiedlichste Träger-Außenschichten, die als solche auch mehrschichtig sein können, anlaminiert sein kann. Es bedarf grundsätzlich keiner Anpassung an besondere Strukturen des Trägermaterials. Dazu trägt bei, dass die Innenfolie aus einer einheitlichen Masse, das heißt aus einer Matrix hergestellt ist, die schichtfrei aus einem durchgängig einheitlichen Folienmaterial besteht. Bestandteil der Masse bzw. der Matrix ist zugleich das Transfermittel, das als solches gleichmäßig in die Folie eingearbeitet ist. Das Transfermittel (Farb-/Aromastoffe) wird nicht von Fall zu Fall oder separat in die Nahrungsmittelhülle eingebracht, sondern nur als Bestandteil der fertigen vorkonfektionierten Innenfolie. Aufgrund der Verwendbarkeit für die unterschiedlichsten Funktions-Barriere-Außenschichten kann auch unterschiedlichsten Anforderungen der Nahrungsmittelindustrie, insbesondere der Fleisch- und Wurstwarenindustrie einfach und wirtschaftlich entsprochen werden.

Die essbare Innenfolie besteht auf Polysaccharid-Basis, zum Beispiel vorteilhaft auf Basis von Stärke, Zellulose, Karrageen, Alginat, deren modifizierten Derivaten oder Mischungen derselben. Relevante Eigenschaften der Innenfolie werden jedenfalls wesentlich von Polysacchariden bestimmt oder mitbestimmt. Vorzugsweise ist die Innenfolie eine Folie, die Zellulose oder modifizierte Zellulose enthält. Insbesondere enthält die Innenfolie zusätzlich Stärke oder modifizierte Stärke. Die Innenfolie aus Zellulose lässt sich großtechnisch wirtschaftlich und in Massenproduktion herstellen. Die Folie kann auch aus anderem Material schichtfrei derart gebildet werden, dass sie als solche homogen ist, wobei die Oberfläche durch Nässe gezielt anlösbar ist, um die Laminatklebung herzustellen.

Die Innenfolie zeichnet sich weiter dadurch aus, dass sie sich bei Druckanlage an dem Nahrungsmittel unter Bedingungen der Nahrungsmittelherstellung zum Überführen des Transfermittels an das Nahrungsmittel auflöst. Das heißt, dass die essbare Innenfolie, wenn sie an dem mit Transfermittel zu versehenen Nahrungsmittel in feuchtem Milieu anliegt und/oder wenn das mit der Nahrungsmittelhülle verpackte Produkt gegart, gekocht, gebrüht wird oder reift, instabil wird. Sie geht von einem stabilen festen zusammenhängenden Zustand in einen nicht-festen und/oder nicht-zusammenhängenden Zustand über. Die Innenfolie hört auf zu existieren, und es bleibt das in sie eingearbeitete, insbesondere in ihrer Matrix, also in ihrer Grundmasse gelöste Transfermittel an dem Nahrungsmittel zurück. In gelöstem Zustand zurückbleibendes essbares Folienmaterial wird Bestandteil des Nahrungsmittels an dessen Oberfläche. Zwar ist die Verbindung mittels des integrierten Klebemittels als solche stoffschlüssig. Nach Auflösen der Innenfolie jedoch lässt sich die Außenschicht, die die Trägerhülle bildet, einfach von dem Nahrungsmittel abtrennen. Es kommt aber auch in Betracht, die Klebeverbindung mittels der Matrix der Innenfolie so einzurichten, dass sich die Außenschicht bereits nach Trocknung des Laminats sauber flächig von der Innenfolie abziehen lässt. Infolge des beschriebenen Auflösens der Innenfolie entstehen an dem Nahrungsmittel keine feuchten, die Qualität der Nahrungsmitteloberfläche beeinträchtigenden Rückstände. Unappetitliche, nicht aufgelöste Rückstände werden vermieden. Man erreicht auch, dass die Funktion der Außenschicht durch die Innenfolie nicht oder nicht wesentlich beeinträchtigt wird.

Im Ganzen bestehen Produkt-/Herstellungsvorteile insbesondere in einem effizienten Herstellungsverfahren, gleichmäßigem Farb-/Aromaauftrag und trockener Verarbeitung. Damit ist auch erreicht, dass der Betrieb von Füllmaschinen verbessert ist. Verunreinigung von Füllmaschinen infolge des Abstreifens von Farb-/Aromaauftrag während eines Füllvorgangs entfällt, und auch bakteriologische Verkeimung wird vermieden.

Zum Herstellen der erfindungsgemäßen Verpackungs-Flachhülle, das heißt des flachen Flächengebildes ist es von besonderem Vorteil, dass vorbereitete selbständige Flächengebilde erfindungsgemäß aneinander laminiert werden.

Vorteilhaft weist die innere Folie die Eigenschaft auf, dass sie bei mit Wasser nasser Oberfläche klebrig wird. Das heißt, dass zum Befeuchten ein Besprühen mit Wasser erfolgt. Es ist gefunden worden, dass sich die erfindungsgemäßen Klebeeigenschaften gerade mit einem derart nassen Milieu herstellen lassen, während die Applikation nur von Wasserdampf nicht vorteilhaft erscheint oder nicht ausreichend ist.

Erfindungsgemäß ist das Transfermittel derart mit dem Material der Innenfolie vermengt oder in deren Matrix gelöst, dass es nicht als separate Schicht anfällt, sondern Bestandteil der Folienmasse ist. Das Transfermittel wird vorteilhaft aus der Gruppe Lebensmittelfarben, Geschmacksträger, Duftträger, insbesondere nämlich Marinaden, Aromen und Flüssigrauch gewählt.

Vorteilhaft ist die Innenfolie durch eine Folie erhältlich, die zum Erzeugen der selbstklebenden Oberfläche der Laminatverbindung aus einem trockenen nicht-klebrigen Zustand in einen temporär klebrigen Oberflächenzustand überführbar ist.

Wie bereits hervorgehoben, kann die erfindungsgemäße Nahrungsmittelhülle aufgrund ihrer Laminatstruktur und der Eigenschaft der zur Laminhatherstellung verwendeten Innenfolie mit unterschiedlichsten Außen-/Trägerschichten konfektioniert werden. Vorteilhaft besteht die Außenschicht aus einem Trägermaterial einer nicht-essbaren wasserfesten Matrix, das heißt aus einer Grundmasse oder einem Grundmaterial, die aus der Gruppe Textilmaterial, verstärktes Faservlies, mehrschichtige biaxial verstreckte und nicht-verstreckte Barrierefolien aus Kunststoff und Kombinationen solcher Materialien gewählt sind. Eine biaxiale Verstreckung (Rückschrumpf) bewirkt auch nach längerer Zeit, dass die an dem Nahrungsmittel anliegende Flach- bzw. Schlauchhülle mit glatter Oberfläche straff gehalten wird. Es ist gefunden worden, dass das erfindungsgemäße Laminat besonders vorteilhaft mit einer Außenschicht gebildet werden kann, die wenigstens eine Kunststofffolie einer Struktur, Zusammensetzung und Funktion derart aufweist, dass sie eine Rohwurstreifung mit dafür charakteristischen Merkmalen bewirkt. Man erzielt ausreichende Durchlässigkeit von Gas und Wasser sowie eine die Verpackung des Nahrungsmittelprodukts straff und glatt haltende Rückschrumpfung, und zwar mit Langzeitwirkung, nachdem die Innenfolie bereits im Wesentlichen zersetzt worden ist.

Vorteilhaft wird die erfindungsgemäß Nahrungsmittelhülle dadurch hergestellt, dass die Außenschicht und die Innenfolie aus Materialabschnitten vorgefertigter Materialbahnen gewonnen werden, wobei die Materialabschnitte aneinander laminiert werden. Zweckmäßig werden die beiden Materialbahnen im Wickel auf Rollen bereitgestellt, von diesen abgezogen und zum Laminieren aneinander geführt.

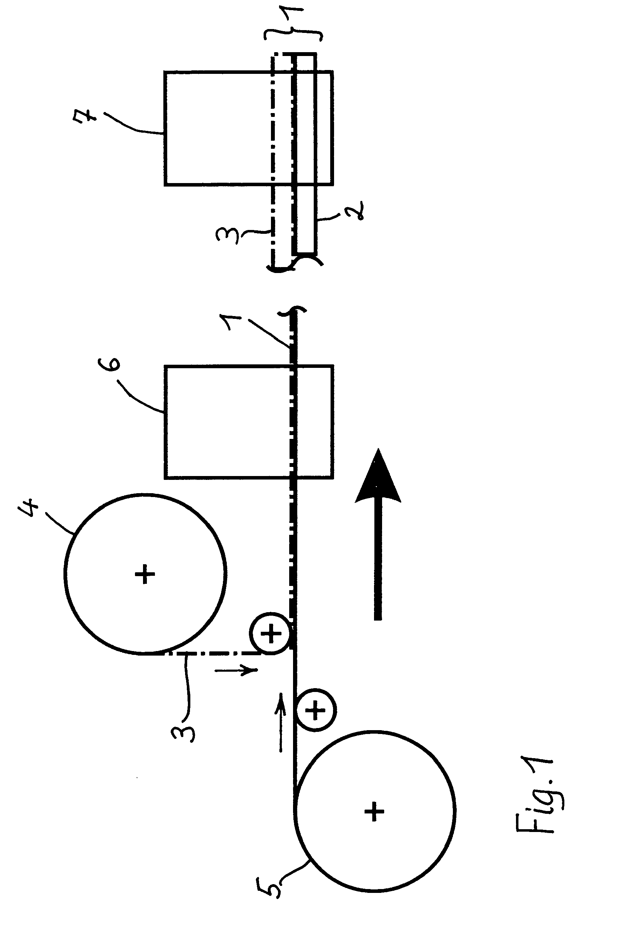

Unteransprüche sind auf die genannten und andere zweckmäßige und vorteilhafte Ausgestaltungen der Erfindung gerichtet. Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben. Es zeigt
- Fig. 1: im Ausführungsbeispiel eine erfindungsgemäße Verpackungs-Flachhülle und deren Herstellungsweg.

Eine erfindungsgemäße Verpackungs-Flachhülle besteht aus einer Außenschicht 2 und einer Innenfolie 3, die aneinander laminiert werden. Zur Verdeutlichung der Darstellung wird die Innenfolie 3 strichpunktiert dargestellt. Das derart gebildete Trägerlaminat 1 fällt in der Form eines flexiblen flachen Flächengebildes an. Dieses kann zu einem Schlauch geformt werden. Ein solcher Nahrungsmittelschlauch wird längsseitig z.B. mittels Klebeband, Schweißung oder Naht geschlossen. Der Schlauch wird gerafft und/oder auf Länge geschnitten, einseitig an einem Ende verschlossen und mit Nahrungsmittel, insbesondere Wurst gefüllt.

Erfindungsgemäß besteht die bereitgestellte essbare Innenfolie aus einem Material oder einer Masse, nämlich aus einer Matrix, die der Innenfolie 3 an ihren Flächenseiten temporär selbstklebende Oberflächeneigenschaft verleit. Eine solche Innenfolie 3 ist zum Beispiel durch eine Folie erhältlich, die aus Polysaccharid, zweckmäßig aus Zellulose, gebildet ist und zusätzlich insbesondere Stärke oder modifizierte Stärke enthält. Die erfindungsgemäß verwendete Innenfolie 3 wird im Ausführungsbeispiel als vorgefertigte, trocken konfektionierte Bahn bereitgestellt, die im Wickel auf einer Vorratsrolle 4 zur Verfügung steht.

Die Außenschicht 2 ist eine Trägerschicht. Bei dieser Außenschicht 2 handelt es sich um eine Funktions-/Barriereschicht, die in unterschiedlichster Form insbesondere mehrschichtig ausgebildet sein kann, um gewünschte Durchlass- bzw. Sperreigenschaften für Wasserdampf, Sauerstoff, allgemein Gase, Wasser und/oder Fette einzurichten. Die Außenschicht ist grundsätzlich nicht-wasserlöslich. Ihre Matrix, also ihr Grundmaterial kann zum Beispiel synthetische Polymere enthalten, insbesondere Polyethylen (PE) und Polyamid (PA). Eine solche Außenschicht wird zum Beispiel zum Herstellen einer Schlauchhülle für Kochpökelware oder Brühwurst vorgesehen. Man erreicht damit, dass beim Kochen, Brühen bzw. Garen keine Gewichtsverluste eintreten. Zudem vermeidet man eine Zweitverpackung. Die Außenschicht 2 kann zum Beispiel auch ein Textilträger sein, der aus einem textilen Gewebe oder Mischgewebe hergestellt wird. Eine daraus gebildete Schlauchhülle wird zum Beispiel mit Rohwurst gefüllt, um mittels Reifung Gewichtsverluste herbeizuführen. Die Außenschicht 2 kann zum Beispiel auch durch ein Zellulose-Fasermaterial gebildet werden, das besonders verstärkt werden kann. Zum erfindungsgemäßen Herstellen der erfindungsgemäßen Flachhüllen kann praktisch jede andere Funktions-/Barriere-Außenschicht verwendet werden. Als Bestandteil des erfindungsgemäßen Laminats eignen sich besonders Kunststofffolien, die eine Rohwurstreifung und über lange Zeitspanne Rückschrumpfung bewirken.

Auch die Außenschicht 2 wird im Ausführungsbeispiel als Bahnmaterial-Wickel auf einer Vorratsrolle 5 bereitgestellt. In einer Laminiereinrichtung 6 werden die beiden Bahnen der Innenfolie 3 und der Außenschicht 2 aneinander geklebt. Dies gelingt erfindungsgemäß besonderes einfach dadurch, dass in der Laminiereinrichtung 6 die Innenfolie 3 an ihrer Oberflächenseite, die zur Klebeverbindung an die Bahn der Außenschicht 2 angelegt wird, feucht gemacht wird. Dies geschieht dadurch, dass die Oberfläche wässrig nass gemacht wird.

Die Eigenschaft der Matrix der Innenfolie 3 ist derart, dass die nasse Oberfläche vorübergehend (temporär) klebrig wird. Diese klebrige Oberfläche, die der Innenfolie 3 immanent ist, bildet das Klebe- und Haftmittel für die über einen Bahnabschnitt angelegte Außenschicht 2. Auf diese Weise werden die beiden Bahnen in der Laminiereinrichtung 6 aneinander geklebt.

Nach einem Ausführungsbeispiel wird in der Laminiereinrichtung 6 besonders bevorzugt eine direkte Befeuchtung vorgesehen, und zwar derart, dass die Außenschicht 2 als feste tragfähige Bahn genutzt wird, die in zumindest im Wesentlichen horizontaler Lage straff geführt und gezielt mit Nässe vorgegebener Menge beaufschlagt wird, wobei die zunächst trockene Innenfolie-Bahn mit angepasster Bahnbreite auf die mit definierter Nässe versehene Oberfläche der Außenschicht-Trägerbahn deckungsgleich aufgelegt wird. In dieser Anlage, die derart lose herbeigeführt wird, dass es keines besonderen Andrückmittels bedarf, werden die beiden Bahnen durch eine Trockeneinrichtung, zweckmäßig durch einen nicht dargestellten Trockentunnel der Laminiereinrichtung 6 geführt. Mit der Trocknung wird der Laminatverbund der beiden Bahnen vollzogen. Die straff geführte feste Außenschicht-Trägerbahn bildet entlang freier Strecke, d.h. ohne zur Führung selbst anzuliegen, die mit Nässe versehene Anlage- und Stützfläche für die Innenfolie-Bahn. Man erreicht einen besonders innigen und festen Laminatverbund.

Gemäß einem anderen Ausführungsbeispiel erfolgt in der Laminiereinrichtung 6 eine indirekte Befeuchtung derart, dass die trockene Innenfolie-Bahn zunächst auf die gleichfalls zumindest im Wesentlichen horizontal und frei geführte Außenschicht-Bahn aufgelegt und dann auf der der Außenschicht-Bahn abgewandten Oberflächenseite mit wässriger Nässe beaufschlagt wird. Auch diese Befeuchtung erfolgt gezielt und definiert mit eingestellter Wassermenge pro laufendem gemeinsamem Abschnitt der beiden Bahnen, z.B. pro laufendem Meter. Die Befeuchtung findet in einem Maß statt, dass die von der Außenschicht-Bahn gestützte Innenfolie-Bahn nicht zerstört, aber in Gänze so stark angelöst wird, dass die auf der Außenschicht-Bahn flächig anliegende Fläche der Innenfolie-Bahn durch die der Innenfolie immanente Klebrigkeit klebrig wird. Unmittelbar anschließend folgt wieder die Trocknung, die die Laminatverbindung abschließend bewirkt.

Anhand der Ausführungsbeispiele erkennt man, dass die erfindungsgemäße Verfahrenstechnik in jedem Fall besonders vorteilhaft ist, da die Laminiereinrichtung besonders einfach baut, kostengünstig in der Anschaffung ist und sich wirtschaftlich betreiben lässt.

Am Ausgang der Laminiereinrichtung 6 erhält man eine das Trägerlaminat 1 bildende Flachbahn. Diese wird in Fig. 1 hinter der Laminiereinrichtung 6 vergrößert dargestellt. In einer Kalibereinrichtung 7 wird die laminierte Verbundbahn in gewünschte Flachbreiten geschnitten. Es fallen die erfindungsgemäßen Verpackungs-Flachhüllen an, die, wie oben erwähnt, insbesondere zu Schläuchen konfektioniert werden, um sie mit Nahrungsmittel zu befüllen.

Eine wesentliche erfindungsgemäße Maßnahme besteht auch darin, dass wenigstens ein Transfermittel Bestandteil der wasserlöslichen essbaren Matrix der Innenfolie 3 ist, die in trockenem Zustand von der Rolle 4 abgerollt wird. Die Innenfolie 3 wird insbesondere dadurch hergestellt, dass das Transfermittel in die Rohmasse der zu produzierenden Folie eingerührt wird. Aus dieser Masse wird die wickelfähige trockene Innenfolie 3 mit den bezeichneten Eigenschaften hergestellt.

Das Transfermittel kann jedes Mittel sein, dass Farbe, Geschmack, Aroma und/oder dergleichen aufnimmt und abgibt. Das Transfermittel ist gewissermaßen in der Matrix der Innenfolie versiegelt. Erfindungsgemäß weist die Innenfolie 3 nun weiterhin die Eigenschaft auf, dass sie sich bei Druckanlage an dem Nahrungsmittel unter Bedingungen der Nahrungsmittelherstellung zum Überführen des Transfermittels an das Nahrungsmittel auflöst. Man erreicht damit, dass die erfindungsgemäße Verpackung-Flachhülle bzw. die daraus gebildete Schlauchhülle bei Druckanlage in feuchtem Milieu an das Nahrungsmittel, insbesondere beim Kochen, Brühen, Garen und/oder Reifen das Transfermittel aus der Folienmatrix befreit und an das Nahrungsmittel abgibt, wobei sich die Folie zersetzt und auflöst. Die Barriere- bzw. Durchlassfunktionen werden wesentlich durch die Charakteristika der Außenschicht 2 bestimmt. Das heißt, dass die Innenfolie 3 die Funktion der Außenschicht 2 nicht beeinträchtigt und sie jedenfalls nicht wesentlich mitbestimmt.

Man erkennt anhand der Ausführungsbeispiele, dass die erfindungsgemäßen Maßnahmen zu einer Reihe von fertigungstechnischen und funktionellen Vorteilen zum Herstellen und Verwenden der Transfer-Verpackungshülle in Flachform und Schlauchform führen. Die Herstellung ist besonders einfach und kostengünstig, da das Laminat durch eine in die Innenfolie integrierte Klebe- und Hafteigenschaft an der Oberfläche der vorgefertigten Innenfolie genutzt wird. Dabei ist die Innenfolie 3 schichtfrei und homogen und als solche der Speicher für das Transfermittel. Dies erlaubt einen relativ sparsamen Einsatz des Transfermittels. Zudem kann die Innenfolie 2 an unterschiedlichste Träger-Außenschichten 3 anlaminiert werden. Die Verpackungs-Flachhülle lässt sich in Raff-und Füllmaschinen besonders vorteilhaft verarbeiten. Die Übertragung des Transfermittels ist besonders gleichmäßig. Die Verpackungs-Flachhülle wird mit glatten, durch Transfermittel nicht beeinflusste Außenflächen hergestellt. Infolgedessen sind anderenfalls auftretende Quellen der Verunreinigung und bakteriologischer Verkeimung in Raff-/Füllmaschinen beseitigt. Die Außenschicht 2 lässt sich einfach von dem mit Transfermittel versehenen Nahrungsmittelprodukt lösen.

## Patentansprüche

1. Wenigstens ein Transfermittel als Nahrungsmittelzusatzstoff enthaltende Verpackungs-Flachhülle in Form eines flexiblen Trägerlaminats (1) zur Anlage an ein mit dem Transfermittel zu versehendes Nahrungsmittel, umfassend eine eine packfeste Trägerschicht bildende nicht-essbare, nicht-wasserlösliche Außenschicht (2) und eine das Transfermittel enthaltende, zur Anlage an das Nahrungsmittel bestimmte Innenschicht, **dadurch gekennzeichnet, dass** die Innenschicht aus einer essbaren Innenfolie (3) auf Polysaccharid-Basis besteht, die sich bei Druckanlage an dem Nahrungsmittel unter Bedingungen der Nahrungsmittelherstellung zum Überführen des Transfermittels an das Nahrungsmittel auflöst, wobei die Innenfolie (3) aus einheitlicher Masse hergestellt ist, deren Bestandteil das Transfermittel ist und die der Innenfolie (3) an ihren Flächenseiten temporär selbstklebende Oberflächeneigenschaft derart verleiht, dass die selbstklebende Oberfläche an einer Flachseite der Innenfolie (3) ein in die Flachhülle integriertes Klebemittel bildet, das als solches allein zwischen Außenschicht (2) und Innenfolie (3) eine das **dadurch** das Trägerlaminat (1) herstellende flächige stoffschlüssige Laminatverbindung bildet.

2. Flachhülle nach Anspruch 1, **dadurch gekennzeichnet, dass** die Innenfolie (3) eine Folie ist, die Zellulose oder modifizierte Zellulose enthält.

3. Flachhülle nach Anspruch 2, **dadurch gekennzeichnet, dass** die Innenfolie (3) eine Folie ist, die zusätzlich Stärke oder modifizierte Stärke enthält.

4. Flachhülle nach einem der Ansprüche 1 bis 3, **dadurch gekennzeichnet, dass** das bzw. jedes Transfermittel aus der Gruppe Lebensmittelfarben, Geschmacksträger, Duftträger, insbesondere nämlich Marinaden, Aromen und Flüssigrauch gewählt ist.

5. Flachhülle nach einem der Ansprüche 1 bis 4, **dadurch gekennzeichnet, dass** die Innenfolie (3) eine Folie ist, die zum Erzeugen der selbstklebenden Oberfläche der Laminatverbindung aus einem trockenen nicht-klebrigen Zustand in einen temporären klebrigen Oberflächenzustand überführbar ist.

6. Flachhülle nach einem der Ansprüche 1 bis 5, **dadurch gekennzeichnet, dass** das bzw. jedes Transfermittel in der Matrix der Innenfolie enthalten, insbesondere gelöst ist.

7. Flachhülle nach einem der Ansprüche 1 bis 6, **dadurch gekennzeichnet, dass** der temporäre klebrige Oberflächenzustand zum Herstellen der Laminatverbindung in einem nassen, zweckmäßig mit Wasser erzeugten Milieu erhältlich ist.

8. Flachhülle nach einem der Ansprüche 1 bis 7, **dadurchgekennzeichnet**, **dass** die Innenfolie (3) eine konfektionierbare Folie ist.

9. Flachhülle nach einem der Ansprüche 1 bis 8, **dadurch gekennzeichnet, dass** das Laminat aus zwei deckungsgleich aneinander laminierte, die Außenschicht (2) und die Innenfolie (3) bildende Materialabschnitte vorgefertigter Materialbahnen gebildet ist, wobei die Außenschicht (2) aus einem Bahnabschnitt eines Wickels der Materialbahn besteht.

10. Flachhülle nach Anspruch 9, **dadurch gekennzeichnet, dass** die Innenfolie (3) aus einem Bahnabschnitt eines Wickels der Materialbahn besteht.

11. Flachhülle nach einem der Ansprüche 1 bis 10, **dadurch gekennzeichnet, dass** die Außenschicht aus einem Trägermaterial einer wasserfesten Matrix besteht, die aus der Gruppe Textilmaterial, verstärktes Faservlies, mehrschichtige Barrierefolien und Kombinationen solcher Materialien gewählt ist.

12. Flachhülle nach einem der Ansprüche 1 bis 11, **dadurch gekennzeichnet, dass** das Trägerlaminat (1) mit einer Außenschicht (2) gebildet ist, die wenigstens eine Kunststofffolie aufweist, die eine Rohwurst-Reifung mit Langzeit-Rückschrumpfung bewirkt.

13. Verfahren zum Herstellen einer wenigstens ein Transfermittel enthaltenden Verpackungs-Flachhülle in Form eines flexiblen Trägerlaminats (1), insbesondere einer Verpackungs-Flachhülle nach einem der Ansprüche 1 bis 12, wobei das Trägerlaminat (1) durch Aneinanderlaminieren einer Außenschicht (2) und einer mit dem Transfermittel versehenen und zur Anlage an ein Nahrungsmittel bestimmten Innenschicht hergestellt wird, **dadurch gekennzeichnet, dass** eine die Innenschicht bildende, auf Polysaccharid-Basis hergestellte essbare Innenfolie bereitgestellt wird, die aus einheitlicher Masse gebildet ist, die sich bei Druckanlage an dem Nahrungsmittel unter Bedingungen der Nahrungsmittelherstellung zum Überführen des Transfermittels an das Nahrungsmittel auflöst, deren Bestandteil das Transfermittel ist und die der Innenfolie an ihren Flächenseiten durch feuchtes Milieu temporär selbstklebende Oberflächeneigenschaft verleiht, und dass das Trägerlaminat **dadurch** hergestellt wird, dass mittels der in feuchtem Milieu klebrigen Oberfläche die Außenschicht (2) und die Innenfolie (3) aneinander laminiert werden.

14. Verfahren nach Anspruch 13, **dadurch gekennzeichnet, dass** die Innenfolie (3) in trockenem, nicht-klebrigem Zustand bereitgestellt und aus diesem Zustand in den temporären klebrigen Oberflächenzustand zum Herstellen der Laminatverbindung überführt wird.

15. Verfahren nach Anspruch 13 oder 14, **dadurch gekennzeichnet, dass** im Zuge der Herstellung der Innenfolie (3) das bzw. jedes Transfermittel in eine folienerzeugende Rohmasse eingerührt wird.

16. Verfahren nach einem der Ansprüche 13 bis 15, **dadurch gekennzeichnet, dass** die Innenfolie (3) zusammen mit dem darin enthaltenen Transfermittel schichtfrei aus einem durchgängig einheitlichen Folienmaterial gebildet wird.

17. Verfahren nach einem Ansprüche 13 bis 16, **dadurch gekennzeichnet, dass** die Außenschicht (2) und die Innenfolie (3) bildende Materialabschnitte vorgefertigter Materialbahnen mittels der temporären klebrigen Oberfläche der Innenfolie (3) aneinander laminiert werden.

18. Verfahren nach Anspruch 17, **dadurch gekennzeichnet, dass** die Außenschicht (2) und die Innenfolie (3) jeweils von einer zum Wickel konfektionierten Bahn abgerollt und dabei zum Laminieren aneinander geführt werden

19. Verfahren nach Anspruch 17 oder 18, **dadurch gekennzeichnet, dass** eine indirekte Befeuchtung der Innenfolie-Bahn derart erfolgt, dass die zunächst trockene Innenfolie-Bahn auf die trockene, feste und tragfähige Außenschicht-Bahn, die zumindest im Wesentlichen horizontal geführt wird, aufgelegt und dann auf der der Außenschicht-Bahn abgewandten Oberflächenseite mit wässriger Nässe in einem Maß beaufschlagt wird, dass die Innenfolie-Bahn so stark angelöst wird, dass die auf der Außenschicht-Bahn anliegende Fläche der Innenfolie-Bahn klebrig wird, und dass anschließend die beiden Bahnen zum Vollzug der Laminatverbindung getrocknet werden.

20. Verfahren nach einem Ansprüche 17 oder 18, **dadurch gekennzeichnet, dass** eine direkte Befeuchtung der Innenfolie-Bahn derart erfolgt, dass die Außenschicht (2) als feste tragfähige Bahn verwendet wird, die in zumindest im Wesentlichen horizontaler Lage straff geführt und gezielt mit Nässe in vorgegebenem Maß beaufschlagt wird, wobei die zunächst trockene Innenfolie-Bahn mit angespasster Bahnbreite auf die mit der vorgegebenen Nässe versehene Oberfläche der Außenschicht-Trägerbahn aufgelegt wird und die beiden Bahnen anschließend zum Vollzug der Laminatverbindung getrocknet werden.

21. Verwendung der Flachhülle gemäß einem der Ansprüche 1 bis 12 oder einer nach einem der Verfahrensansprüche 13 bis 20 hergestellten Flachhülle als Darm für Wurst oder Fleischwaren, wobei aus der Flachhülle eine geraffte Schlauchhülle gebildet und in diese Wurst-/Fleischwaren eingefüllt werden.
